Europäisches Patentamt

European Patent Office

Office européen des brevets

(11) Veröffentlichungsnummer: **0 351 886**
**A1**

## (12) EUROPÄISCHE PATENTANMELDUNG

(21) Anmeldenummer: 89115440.3

(22) Anmeldetag: 19.12.84

(51) Int. Cl.⁴: **C08J 5/18 , C08J 7/00 , G02F 1/133**

(30) Priorität: 31.12.83 DE 3347684

(43) Veröffentlichungstag der Anmeldung:
24.01.90 Patentblatt 90/04

(60) Veröffentlichungsnummer der früheren
Anmeldung nach Art. 76 EPÜ: **0 147 779**

(84) Benannte Vertragsstaaten:
CH DE FR GB LI NL

(71) Anmelder: **BAYER AG**

**D-5090 Leverkusen 1 Bayerwerk(DE)**

(72) Erfinder: **Weber, Hans-Leo, Dipl.-Ing.**
**Dahlienweg 7**
**D-4049 Rommerskirchen 2(DE)**
Erfinder: **Claussen, Uwe, Dr.**
**Am Wasserturm 15b**
**D-5090 Leverkusen 3(DE)**
Erfinder: **Hannes, Hellmut, Dr.**
**Am Steege 56**
**D-3101 Beedenbostel(DE)**

(54) Verfahren zur Herstellung von Polycarbonat-Folien mit verbesserten optischen Eigenschaften.

(57) Eine optisch nahezu isotrope Polycarbonat-Folie, insbesondere zur Verwendung bei Flüssigkristall-Anzeige-einheiten, kann dadurch hergestellt werden, daß man zunächst durch Gießen oder Extrudieren eine optisch einachsige, doppelbrechende Polycarbonat-Folie erzeugt und anschließend in oberflächennahen Schichten der Folien durch Erwärmung eine irreversible molekulare Umorientierung in den oberflächennahen Schichten erzeugt wird. Diese Umorientierung bleibt nach dem Abkühlen der Folie bestehen und hat zur Folge, daß die ursprünglich vorhandene Doppelbrechung (Anisotropie) aufgehoben bzw. kompensiert wird.

EP 0 351 886 A1

## Verfahren zur Herstellung von Polycarbonat-Folien mit verbesserten optischen Eigenschaften

Die Erfindung betrifft ein Verfahren zur Herstellung einer optisch nahezu isotropen Polycarbonat-Folie und deren Verwendung bei Flüssigkristall-Sichtanzeigen.

Bei den meisten technischen Anwendungen von Kunststoff-Folien wirkt sich die häufig vorhandene optische Anisotropie, die zu einer Doppelbrechung führt, nicht aus. Solche Anwendungen sind z.B. Zeichenfolien in der Kartographie, Informationsträger für Signalanzeigen, Farbfilter, Membranschalter und Reflex-Zonen. Dagegen ist die Isotropie eine wichtige Eigenschaft, wenn die Kunststoff-Folien in optischen Geräten oder Anordnungen verwendet werden, die mit polarisiertem Licht arbeiten. Dies ist z.B. bei den bekannten Flüssigkristall-Anzeigeeinheiten (LCD) der Fall. Die bei solchen Anzeigeeinheiten verwendeten Fenster oder Substrate dürfen keinen störenden Einfluß auf das polarisierte Licht ausüben.

Bekanntlich beruht die Doppelbrechung in einem optisch einachsigen Kristall darauf, daß Lichtwellen mit senkrecht aufeinander stehenden Polarisationsebenen in der Regel verschieden starke Ausbreitungsgeschwindigkeiten im Kristall annehmen. Gleichzeitig mit der Doppelbrechung wird der Polarisationszustand des Lichtes verändert. Es leuchtet daher ein, daß die Verwendung von doppelbrechenden Kunststoff-Folien als Fenster bei Anzeigeeinheiten (displays) zu großen Schwierigkeiten führt, wenn der Anzeigeeffekt seinerseits auf einer durch das elektrische Feld beeinflußten Doppelbrechung oder Drehung der Polarisationsebene in der flüssigen Kristallschicht beruht. Die Lösung des Problems der Doppelbrechung bildet daher die wesentliche Voraussetzung für die technische Verwendung von Kunststoff-Folien in Flüssigkristall-Anzeigeeinheiten. Aus diesem Grund wird bei Flüssigkristall-Anzeigen bisher Glas als universeller und einzig technisch brauchbarer Werkstoff eingesetzt. Die Verwendung von Glas ist jedoch mit einer Reihe von Nachteilen verbunden. Wegen der schwierigen Verarbeitung von Glas können nur bestimmte, von der Maschinenausrüstung abhängige Formate bereitgestellt werden, die sich kostengünstig durch Ritzen und Brechen nur auf Rechteckformate unterteilen lassen. Dabei entstehende Glassplitter können die Funktion der Anzeige beeinträchtigen und damit zu Ausfällen führen.

Weiterhin ist der Handhabungs- und Lagerungsaufwand bei den anfallenden hohen Stückzahlen und verschiedenen Formaten erheblich. Darüber hinaus bedingt die Zerbrechlichkeit des Glases Plattenstärken von mindestens 1 mm, so daß sich das Eigengewicht der Glasplatten im Vergleich zu den anderen Bauelementen der Anzeigeeinheit störend bemerkbar macht.

Es hat daher nicht an Versuchen gefehlt, durchsichtige Kunststoffe bei Flüssigkristall-Anzeigen einzusetzen (siehe z.B. US 4 228 574, GB 2 052 779, SID 81, Seite 86 und S. 116 und SID 82, Seite 178 - 181). Kunststoff ist aber in der Regel nicht gleichmäßig isotrop und mechanisch oder chemisch besonders widerstandsfähig. Außerdem läßt sich die Technologie der Flüssigkristall-Anzeigen auf der Basis von Glas nicht ohne weiteres auf Kunststoff übertragen. Zwar kann man für jeden Verfahrensschritt der Glastechnologie einen Kunststoff finden, der den Eigenschaften des Glases nahekommt oder es sogar übertrifft. Bislang ist jedoch keine Flüssigkristall-Anzeige auf der Basis von Kunststoffen bekannt geworden, die der Glas-Flüssigkristall-Anzeige ebenbürtig wäre, da es keinen Kunststoff, gibt, der gleichzeitig alle geforderten Eigenschaften erfüllt.

Es ist auch bekannt, Polycarbonat-Folien für diesen Zweck zu verwenden (JP 55 017 135). Ferner ist es aus der DT-AS 1 232 336 bekannt, die elektrischen und mechanischen Eigenschaften von Polycarbonat-Folien durch Behandlung in einem Lösungs- oder Quellmittelbad zu verbessern. Die Änderung dieser Eigenschaften ist auf eine Strukturänderung der Folie zurückzuführen, die durch einen Schrumpfungsprozeß bedingt ist. Dem Problem der optischen Doppelbrechung wird jedoch keine Beachtung geschenkt.

Der Erfindung liegt deshalb die Aufgabe zugrunde, Polycarbonat-Folien bereitzustellen, bei denen die Doppelbrechung eliminiert oder zumindest stark reduziert ist.

Diese Aufgabe wird erfindungsgemäß dadurch gelöst, daß zunächst in bekannter Weise durch Gießen oder Extrudieren eine optisch einachsige, doppelbrechende Polycarbonat-Folie hergestellt wird und anschließend in oberflächennahen Schichten der Folie durch Strahlungswärme irreversible Struktur-Relaxationsprozesse ausgelöst werden, die eine molekulare Umorientierung in den oberflächennahen Schichten bewirken, welche nach dem Abkühlen der Folie bestehen bleibt und eine Aufhebung bzw. Kompensation der Doppelbrechung zur Folge hat. Durch die thermische Behandlung wird der molekulare Verband der Moleküle in oberflächennahen Zonen offensichtlich so stark gelockert, daß eine molekulare Umorientierung (Relaxation) ermöglich wird und die Doppelbrechung nahezu ganz verschwindet. Überraschend ist, daß diese Umorientierung irreversibel bleibt; d.h. bei Abkühlen sozusagen eingefroren wird. Wesentlich ist dabei, daß die Folie nur für eine relativ kurze Zeit der Strahlungswärme ausgesetzt wird. Durch die Strahlungswärme werden also vorübergehend oberflächennahe Schichten der Folie aufgeheizt, während das Volumen nicht oder nur kaum erfaßt wird. Dies gilt vor allem für Strahlungsquellen, deren Wellenlänge im Gebiet einer Absorptionsbande des Folienmaterials liegt. Über die Wellenlänge kann die Eindringtiefe der Strahlung gesteuert werden. Unter einer "oberflächennahen Schicht" wird hier definitionsgemäß ein Bereich verstanden, der 10 bis 30 %, vorzugsweise 15 bis 20 % der Gesamtdicke der Folie entspricht.

Im Gegensatz dazu steht der in der Technik häufig angewandte Temperprozeß, bei dem das gesamte Materialvolumen unter stationären Bedingungen aufgeheizt wird.

Die ursprünglich vorhandene Doppelbrechung wird durch die thermische Behandlung so stark reduziert, daß praktisch keine Änderung des Polarisationszustandes eintritt, wenn diese Folien in Verbindung mit LCD-Displays verwendet werden. Eine mögliche Erklärung für die Reduzierung der Doppelbrechung besteht darin, daß - bedingt durch den Herstellungsprozeß (Gießen) - in oberflächennahen Schichten gerichtete Molekülstrukturen vorhanden sind, die eine Anisotropie und damit optische Doppelbrechung verursachen. Bei der Erwärmung dieser Schichten wird nun der Molekularverband gelockert und die Beweglichkeit der Moleküle so weit erhöht, daß die oben erwähnten Ausgleichs- und Relaxationsvorgänge stattfinden können und die Anisotropie weitgehend verschwindet.

Zweckmäßig geht man von gegossenen Kunststoff-Folien aus, deren Dicke im Bereich von 5 μm bis 0,8 mm, vorzugsweise von 50 μm bis 300 μm, liegt.

Die so hergestellten, nahezu doppelbrechungsfreien Polycarbonat-Folien sind als Bauelemente (Fenster oder Substrate) für Flüssigkristall-Displays geeignet, bei denen die Anzeige mit polarisiertem Licht erfolgt.

Beispiel 1

Bisphenol-A Polycarbonat mit einem mittleren Molgewicht von 98.000 wird bei 20°C in Methylenchlorid (0,5 g/ml) gelöst und diese Lösung auf einen langsam rotierenden, beheizten und polierten Zylinder über eine Rakelvorrichtung aufgegeben. Man erhält einen klaren durchsichtigen Film mit einer Schichtdicke von 200 μm. Diese Folie wird in einem Polarisationsmikroskop zwischen gekreuzten Polarisatoren quantitativ mit einem Kompensator analysiert. Es ergibt sich eine starke Doppelbrechung entsprechend einem Gangunterschied von ΔG = 74 nm. Das Produkt ist optisch einachsig.

Bringt man die noch doppelbrechende Folie in einen Strahlengang mit gekreuzten Polarisationsfiltern, so zeigt sich eine deutliche Aufhellung. Diese Aufhellung ist darauf zurückzuführen, daß mit der Doppelbrechung der Polarisationszustand des Lichtes verändert wird. Da der Anzeigeeffekt bei vielen Displays gerade auf einem zwischen gekreuzten Polarisatoren beobachteten Aufhellungseffekt beruht, wirkt sich die durch die Doppelbrechung der Folie verursachte Aufhellung störend aus und kann sogar den Anzeigeeffekt völlig überdecken.

Beispiel 2 (thermische Behandlung)

In einer Versuchsserie wurden aus einer gleichermaßen wie im Beispiel 1 hergestellten Polycarbonat-Folie mit einer Dicke von 100 μm Proben längs und quer zur Gießrichtung entnommen und thermisch nachbehandelt. Zu diesem Zweck wurden die Proben spannungsfrei derart in einen Rahmen eingelegt, daß sie nur an zwei gegenüberliegenden Kanten befestigt waren, während sie an den beiden anderen Kanten nicht fixiert waren. Der Rahmen konnte in einer Halterung fixiert werden, wobei die Folien im übrigen freitragend waren, d.h. außer an den gehaltenen Kanten an keiner Stelle auf einem Träger auflagen. Über diese Anordnung wurde in einem Abstand von ca. 35 cm ein Quarzheizstrahler mit einer Energiedichte von 20 kW/m² angebracht. Durch eine relativ kurze Bestrahlungsdauer im Bereich von 5 s bis 60 s konnte erreicht werden, daß sich im wesentlichen nur die oberflächennahen Schichten aufheizen. Nach dem Abschalten des Strahlers kühlten sich die Folienproben schnell auf Raumtemperatur ab. Sie wurden dann, wie im Beispiel 1 beschrieben, im Polarisationsmikroskop untersucht. Dabei ergaben sich für die längs und quer zur Gießrichtung entnommenen Proben als Funktion der Heizdauer folgende Restgangunterschiede:

EP 0 351 886 A1

| Zeit Sek. | Restgangunterschied (nm) | |
|---|---|---|
| | längs | quer |
| 5 | 61 | 8,5 |
| 10 | 69 | 10,6 |
| 15 | 51 | |
| 20 | 40 | 5,0 |
| 25 | 35 | |
| 30 | 6,5 | 8,7 |
| 35 | 9,5 | |
| 40 | 5,3 | 4,3 |
| 50 | 5,0 | |
| 60 | 4,0 | 2,0 |

Man erkennt, daß der Restgangunterschied bei den in Längsrichtung entnommenen Proben bei einer Heizdauer von 0,5 min auf sehr kleine Werte absinkt. Die in dieser Weise thermisch behandelten Polycarbonatfolien sind also praktisch doppelbrechungsfrei und damit für den Einbau in LCDs gut geeignet.

**Ansprüche**

1. Verfahren zur Herstellung einer optisch nahezu isotropen Polycarbonat-Folie, dadurch gekennzeichnet, daß in an sich bekannter Weise durch Gießen oder Extrudieren eine optisch einachsige, doppelbrechende Kunststoff-Folie hergestellt wird, und anschließend in oberflächennahen Schichten der Folie durch Erwärmung irreversible Relaxationsprozesse ausgelöst werden, die eine molekulare Umorientierung in den oberflächennahen Schichten bewirken, welche nach dem Abkühlen der Folie bestehen bleibt und eine Aufhebung bzw. Kompensation der Doppelbrechung zur Folge hat.

2. Verfahren gemäß Anspruch 1, dadurch gekennzeichnet, daß die irreversiblen Relaxationsprozesse durch Strahlungswärme ausgelöst werden.

3. Verfahren nach Anspruch 1 bis 2, dadurch gekennzeichnet, daß Folien mit einer Dicke von 5 $\mu$m bis 800 $\mu$m, vorzugsweise 50 $\mu$m bis 300 $\mu$m, verwendet werden.

4. Verwendung einer nach Anspruch 1 bis 3 hergestellten Polycarbonat-Folie als Fenster oder Substrat bei Flüssigkristall-Anzeigeeinheiten, die mit polarisiertem Licht arbeiten.

4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE - A1 - 3 127 346 (TOYO BOSEKI K.K.) * Zusammenfassung; Seite 7, Zeile 24 - Seite 16, Zeile 24; Beispiel 1 * -- | 1,3,4 | C 08 J 5/18 C 08 J 7/00 G 02 F 1/133 |
| D,Y | DE - B - 1 232 336 (FARBENFABRIKEN BAYER AKTIEN-GESELLSCHAFT) * Ansprüche; Spalte 2, Zeilen 1-42 * -- | 1-3 | |
| A | EP - A1 - 0 044 702 (MINNESOTA MINING AND MANU-FACTURING COMPANY) * Zusammenfassung; Seite 6, Zeilen 4-6 * -- | 1,3 | |
| A | DE - B - 1 269 804 (FASTMAN KODAK COMPANY) * Anspruch * ---- | 1 | |

| RECHERCHIERTE SACHGEBIETE (Int. Cl.4) |
|---|
| C 08 J G 02 F H 01 L 41/00 |

Der vorliegende Recherchenbericht wurde für alle Patentansprüche erstellt.

| Recherchenort WIEN | Abschlußdatum der Recherche 23-10-1989 | Prüfer WEIGERSTORFER |
|---|---|---|